# FASCICULE DE BREVET EUROPEEN

(11) **EP 1 163 100 B1**
(45) Date de publication et mention de la délivrance du brevet: **22.01.2003**
(21) Numéro de dépôt: 00907719.9
(22) Date de dépôt: 24.02.2000
(51) Int. Cl.: B29C 49/56, B29C 33/22

(54) **UNITE DE MOULAGE ET MACHINE D'EXTRUSION-SOUFFLAGE MUNIE D'UNE TELLE UNITE**
FORMEINHEIT UND EXTRUSIONSBLASVORRICHTUNG DIE IN DIESER FORMEINHEIT VERWENDET WIRD
MOULDING UNIT AND EXTRUSION-BLOW MOULDING MACHINE EQUIPPED THEREWITH

(30) Priorité: 08.03.1999 FR 9902928
(43) Date de publication de la demande: 19.12.2001
(73) Titulaire: SIDEL, 76053 Le Havre Cedex (FR)
(72) Inventeur: DEROUAULT, Philippe, F-76053 Le Havre Cedex (FR); LEMAISTRE, Eric, F-76053 Le Havre Cedex (FR)
(74) Mandataire: Siloret, Patrick
(86) Numéro de dépôt international: FR0000466
(87) Numéro de publication internationale: WO00053394

(56) Documents cités:
- EP-A- 0 730 941
- DE-A- 2 264 887
- FR-A- 2 209 647
- GB-A- 1 106 602

## Description

L'invention se rapporte au domaine des machines d'extrusion-soufflage d'articles en matériau thermoplastique, notamment pour la production de récipients tels que des bouteilles, des flacons ou des bidons.

Une telle machine comporte pour l'essentiel une tête d'extrusion qui produit au moins une paraison tubulaire de matière plastique, au moins une unité de moulage comprenant un moule en deux parties, les deux parties du moule étant amenées à se refermer sur la paraison encore molle en sortie de tête d'extrusion, et un poste de soufflage qui est muni de moyens pour injecter de l'air sous pression à l'intérieur de la paraison enfermée dans le moule. L'air sous pression permet de déformer fa paraison pour qu'elle épouse la forme de la cavité du moule.

La machine peut aussi comporter un poste de décarottage qui permet de découper le matériau excédentaire.

L'invention se rapporte plus particulièrement à une unité de moulage pour une telle machine. Cette unité de moulage comporte un moule en deux parties dans lequel chaque demi-moule est porté par un support mobile. Les deux supports mobiles sont déplacés transversalement selon des sens opposés par rapport à un châssis qui les porte. Dans une position ouverte, les deux demi-moules sont dégagés transversalement l'un de l'autre pour permettre l'introduction d'une ébauche de l'article, à savoir une paraison, dans une cavité délimitée entre les deux demi-moules. Dans une position fermée, les deux demi-moules sont en appui l'un contre l'autre par leurs faces avant respectives, et les_supports sont liés l'un à l'autre par des moyens de verrouillage.

Les deux supports peuvent être mobiles en translation selon la direction transversale, mais ils peuvent aussi être mobiles en rotation, par exemple autour d'un axe commun parallèle au plan de joint des deux demi-moules.

Bien entendu, l'unité de moulage comporte un mécanisme de déplacement simultané des deux supports de moules. Ce mécanisme est adapté à la trajectoire relative des deux supports.

Dans les machines d'extrusion soufflage, il est parfois prévu que l'unité de moulage comporte, entre au moins l'un des demi-moules et le support associé, des moyens de compensation à pression de fluide qui poussent transversalement ce demi-moule en direction de l'autre demi-moule. Ces moyens de compensation permettent d'éviter que les deux demi-moules ne puissent s'écarter l'un de l'autre sous l'effet de la pression de soufflage. Ils permettent aussi de plaquer les faces avant des deux demi-moules l'une contre l'autre en dépit de la présence de la matière excédentaire qui est pincée entre les deux demi-moules au moment de la fermeture.

Une machine d'extrusion soufflage incorporant ces caractéristiques est décrite par exemple dans le document US-A-5.730.927.

Les moyens de compensation qui permettent de plaquer très efficacement les deux demi-moules l'un contre l'autre exercent des efforts importants sur le support qui les porte. Ces efforts augmentent avec la taille de l'article à souffler ou, dans le cas d'un moule à plusieurs cavités, avec le nombre de cavités du moule. En effet, les efforts exercés par les moyens de compensation sur le support sont proportionnels d'une part à la pression de soufflage, et d'autre part à la surface projetée, selon la direction transversale, de la cavité ou des cavités du moule. ils dépendent aussi de la quantité de matière pincée entre les deux moules.

Certes, les moyens de verrouillage sont prévus pour pouvoir résister à ces efforts qui tendent à écarter les deux supports l'un de l'autre.

Cependant, les moyens de verrouillage ne peuvent empêcher que le support qui porte les moyens de compensation aura tendance à se déformer sous l'action de ces efforts.

Or, une telle déformation, même peu importante, est alors reportée sur le mécanisme qui commande les déplacements des supports. Il faut alors que ce mécanisme puisse encaisser sans dommage les efforts consécutifs à une telle déformation, ce qui conduit généralement à surdimensionner le mécanisme par rapport à ce qui serait juste nécessaire pour assurer la fonction d'ouverture-fermeture du moule.

Une autre solution consiste à réaliser des supports de moule particulièrement rigides. Or, de tels supports sont alors lourds et volumineux, ce qui, outre un coût de revient plus élevé de ces supports, oblige là encore à prévoir un mécanisme de commande renforcé pour assurer leurs déplacements. Le poids des supports de moule est particulièrement pénalisant dans le cas des machines à haute cadence dans lesquelles on a besoin de réduire le plus possible les temps d'ouverture et de fermeture des moules, et donc d'accroître la vitesse de ces mouvements en dépit de l'inertie constituée par la masse des supports.

L'invention a donc pour but de proposer une nouvelle conception d'une unité de moulage qui permette d'utiliser des supports de moules plus légers sans pour autant nécessiter des moyens de commandes de leurs déplacements qui soient surdimensionnés.

Dans ce but, l'invention propose une unité de moulage du type décrit plus haut, caractérisée en ce que le mécanisme de déplacement des supports est lié au moins au dit support associé par l'intermédiaire de moyens déformables élastiquement aptes à compenser la déformation du support créée par les efforts exercés par les moyens de compensation.

Selon d'autres caractéristiques de l'invention :
- le mécanisme de déplacement agit sur une platine qui est montée à coulissement transversal sur le support, et des moyens formant ressort sont interposés transversalement entre la platine et le support ;
- la platine peut pivoter par rapport au support ;
- les moyens formant ressort comportent des blocs en matériau élastomère ;
- le mécanisme de déplacement des deux supports comporte une vis d'entraînement qui est munie de deux tronçons filetés, les sens d'enroulement des filetages des deux tronçons étant opposés et chaque tronçon fileté coopérant chacun avec un écrou lié à l'un des supports, et les moyens déformables éiastiquement sont interposés entre l'écrou et le support auquel il est lié ;
- les écrous sont des écrous à billes ; et
- l'unité de moulage comporte des moyens de compensation uniquement entre l'un des demi-moules et le support associé, et les moyens déformables élastiquement sont interposés uniquement entre ledit support associé et le mécanisme de déplacement des supports.

L'invention propose aussi une machine d'extrusion-soufflage, caractérisée en ce qu'elle comporte au moins une unité de moulage incorporant l'une quelconque des caractéristiques précédentes.

D'autres caractéristiques et avantages de l'invention apparaîtront à la lecture de la description détaillée qui suit ainsi que dans les dessins annexés dans lesquels :
- la figure 1 est une vue schématique en perspective illustrant une unité de moulage conforme aux enseignement de l'invention dans laquelle le mécanisme de commande des supports est réalisé sous la forme d'un mécanisme à vis et à écrous à billes ;
- la figure 2 est une vue plus détaillée en perspective éclatée illustrant les moyens déformables interposés entre le mécanisme vis/écrou et l'un des supports ;
- la figure 3 est une vue en coupe illustrant plus précisément le montage des moyens déformables.

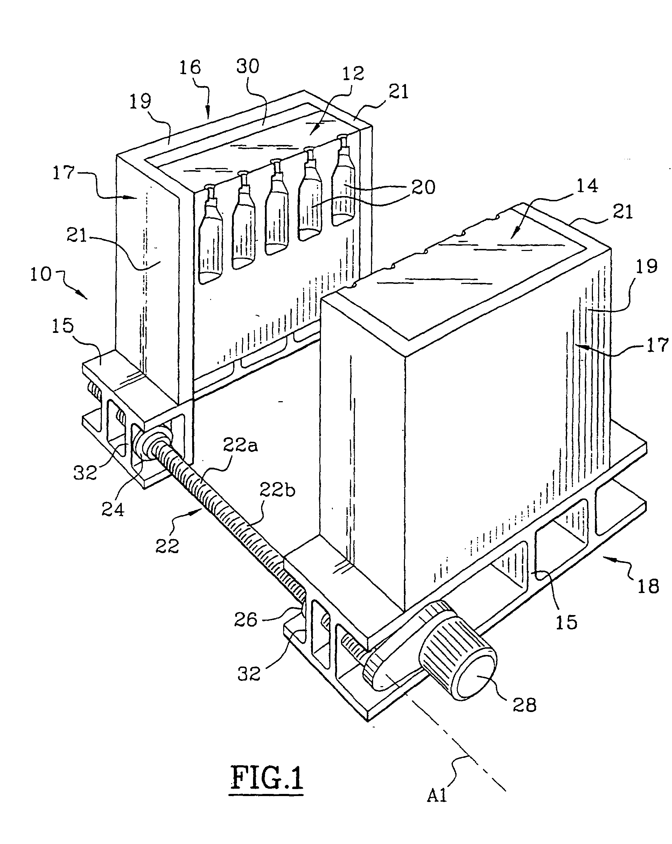

On a illustré de manière schématique sur la figure 1 une unité-de moulage 10 pour une machine d'extrusion-soufflage. L'unité 10 comporte pour l'essentiel deux demi-moules 12,14 dont chacun est porté par un support 16,18. Les deux supports sont mobiles selon un axe transversal perpendiculaire au plan de joint des deux demi-moules 12,14, entre une position fermée et une position ouverture illustrée à la figure 1. Les deux supports 16,18 comportent chacun une embase 15 sur laquelle est montée un porte-moule 17 qui présente une plaque arrière 19 et deux rebords latéraux 21. Les deux faces avant en regard des deux demi-moules comportent des demi-cavités 20 qui, lorsque le moule est fermé, définissent une cavité à la forme de l'article à former.

En l'occurrence, les supports 16,18 sont mobiles transversalement grâce au fait que leurs embases respectives 15 sont montées à coulissement sur des rails transversaux (non représentés).

Pour commander les déplacements relatifs des deux supports 16,18, l'unité 10 comporte un mécanisme de type vis/écrou comportant une vis 22 d'axe transversal A1 et deux écrous à billes dont l'un 24 est solidaire d'un premier support 16 et l'autre 26 du deuxième support 18. La vis 22 est fixe transversalement par rapport à un châssis qui porte l'unité de moulage 10, et elle comporte deux tronçons filetés 22a et 22b qui présentent des pas de vis dont les sens d'enroulement sont inverses l'un de l'autre. L'écrou 24 du premier support coopère avec un premier 22a des tronçons tandis que l'écrou 26 du second support 18 coopère avec l'autre tronçon 22b. De la sorte, lorsque la vis 26 est entraînée en rotation autour de son axe A1 par un moteur 28, les deux supports 16,18 sont commandés simultanément en translation selon des sens opposés. Si la valeur de pas des deux tronçons filetés est la même, les deux supports se déplacent sur une distance égale.

Ce mécanisme est particulièrement avantageux car il comporte un nombre réduit de pièces tout en garantissant une grande précision et une parfaite reproductibilité des déplacements simultanés de deux supports. De plus, l'utilisation d'écrous à billes permet d'une part d'obtenir un bon rendement énergétique et d'autre part d'obtenir des déplacements avec de grandes vitesses et de fortes accélérations.

L'unité de moulage 10 est donc destinée à être amenée en position moule ouvert sous une unité d'extrusion comportant autant de filières d'extrusion que le moule comporte de cavités. Lorsque la paraison extrudée par chaque tête a atteint la longueur voulue, le moule est refermé pour emprisonner, dans chaque cavité, un tronçon de paraison. Le moule est alors fermé par le mécanisme vis/écrous, et les deux. supports sont accrochés l'un à l'autre par des moyens de verrouillage (non représentés) agencés par exemple au niveau des bords avant des rebords 21. Ensuite, l'unité de moulage est destinée à coopérer avec un poste de soufflage pour injecter un fluide sous pression à l'intérieur des paraisons emprisonnées dans chaque cavité afin de mouler la paraison à la forme de la cavité.

Pour compenser la tendance à l'écartement des demi-moules sous l'action du fluide de soufflage, l'unité de soufflage selon l'invention comporte des moyens de compensation à pression de fluide qui sont interposés transversalement entre le support et le demi-moule associé pour repousser le demi-moule considéré en direction de l'autre demi-moule.

Dans l'exemple de réalisation proposé, il est prévu des moyens de compensation uniquement entre le premier support 16 et le demi-moule 12 associé. Le second demi-moule 14 est fixé rigidement sur le second support 18.

Les moyens de compensation sont ici formés d'un coussin souple 30 qui est agencé entre la plaque arrière 19 du support 16 et une face arrière du demi-moule 12. On notera que le coussin présente une superficie sensiblement égale, voire supérieure, à celle du demi-moule. De la sorte, en gonflant le coussin 30 avec un fluide à une pression sensiblement égale à celle du fluide de soufflage, l'action résultante de ces deux fluides sur le demi-moule est une action qui le sollicité en direction de l'autre demi-moule 14.

Dans le cadre de l'extrusion-soufflage, on utilise généralement des pressions de l'ordre d'une dizaine de bars. Aussi, lorsque le moule comporte une cavité de grande taille ou plusieurs cavités, les forces mises en jeu par les pressions de fluides peuvent être très importantes. Or, le coussin de compensation 30 prend appui pour l'essentiel contre la plaque arrière 19 du porte-moule 17.

Selon l'invention, on a prévu de réaliser des supports de moules qui sont suffisamment légers pour autoriser des vitesses de déplacement importantes sans avoir recours à des moyens moteurs trop puissants. Aussi, sous l'effet du coussin de compensation 30, on s'est aperçu que le support pouvait se déformer de façon non négligeable, tout en restant bien entendu dans le domaine de la déformation élastique. Or, une telle déformation peut engendrer des contraintes au niveau de la liaison du support 16 avec le mécanisme de commande de ses déplacements.

Aussi, selon l'invention, on prévoit d'interposer, entre le premier support 16 et l'écrou 24 correspondant, des moyens déformables élastiquement.

Dans l'exemple de réalisation illustré sur la figure 1, la vis 22 est agencée sur l'un des côtés de l'unité de moulage et non pas dans le plan transversal de symétrie de celle-ci. Les écrous 24, 26 sont fixés sur des éléments de plaque 32 des embases 15 de chacun des supports, la vis 22 traversant lesdits éléments plaques 32 qui sont perpendiculaires à l'axe A1.

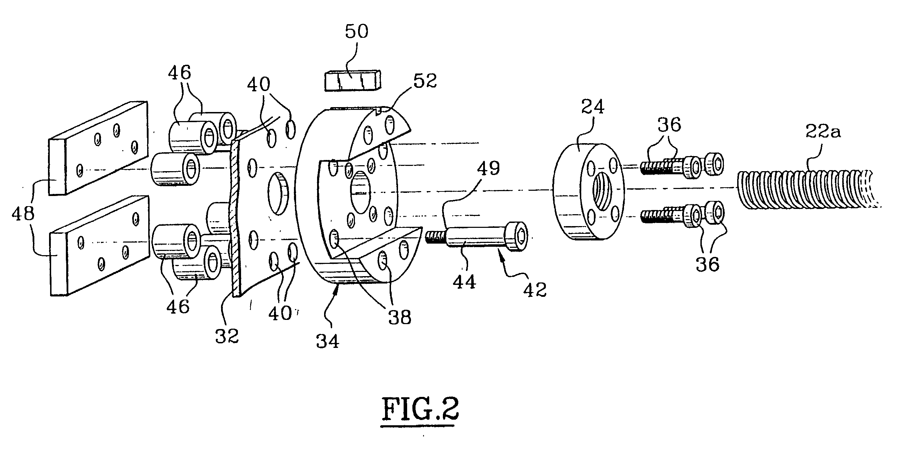

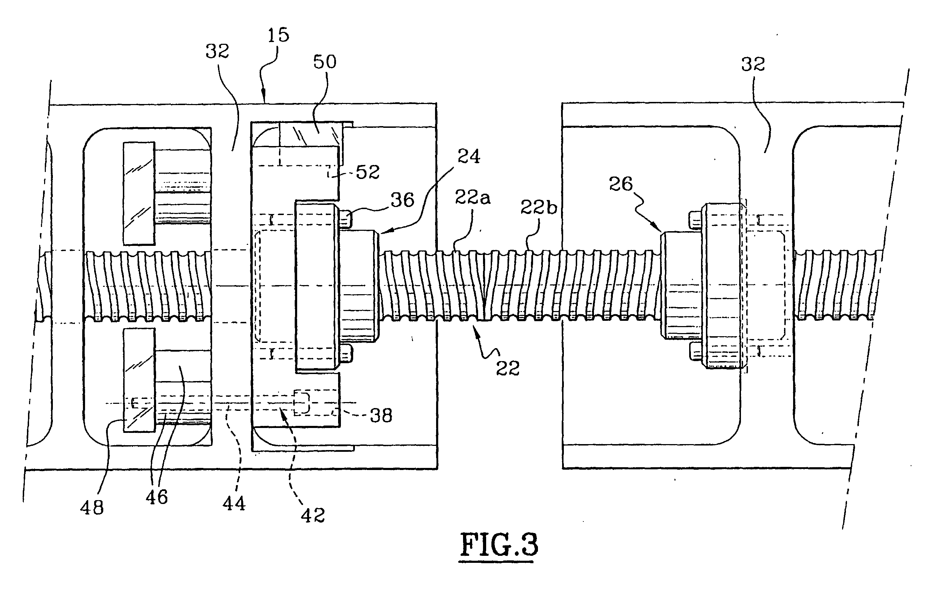

On a illustré sur les figures 2 et 3 de manière plus précise les moyens déformables selon l'invention.

Ainsi, l'écrou 24 est fixé, par quatre vis 36, sur une platine 34 qui est montée à coulissement transversal sur l'élément de plaque 32 de l'embase 15. Pour cela, la platine 34 comporte huit orifices 38 auxquels correspondent huit orifices 40 percés dans l'élément de plaque 32 devant lequel la platine 34 est agencée. Au travers de chacun de ces orifices 38, 40, on engage une vis 42 dont la tête est en appui contre la platine 34 et dont la tige n'est filetée qu'à son extrémité, de sorte qu'elle présente un tronçon lisse 44 sous tête.

La tige de chaque vis 42 est donc engagée transversalement vers l'arrière successivement au travers de la platine 34, de l'élément de plaque 32 et d'un plot tubulaire 46 en matière élastomère. Enfin, l'extrémité libre de chaque vis 42 est vissée dans une plaque de répartition 48 de manière, d'une part, à plaquer la platine 34 contre la face avant de l'élément de plaque 32 et, d'autre part, à serrer transversalement le plot tubulaire 46 contre la face arrière de l'élément de plaque 32.

Dans l'exemple proposé, les huit vis 42 sont réparties angulairement autour de l'axe A1 de manière régulière et il est prévu deux plaques de répartition 48, chaque plaque recevant l'extrémité filetée de quatre vis 42.

Le tronçon lisse 44 de la vis 42 présente une longueur inférieure à la longueur de l'empilement transversal de la platine 34, de l'élément de plaque 32 et du plot tubulaire 46 non déformé, ceci afin de pouvoir précontraindre ce dernier. De plus, le tronçon lisse est de diamètre inférieur au diamètre des orifices 40 de l'élément de plaque 32 du support 16, ceci afin de permettre un libre coulissement de chaque vis 42 par rapport au support 16.

De préférence on prévoira que le tronçon fileté de la vis 42 soit de diamètre inférieur au tronçon lisse 42 de manière à en être séparé par un épaulement 49. Ainsi, la vis 42 peut être serrée jusqu'à ce que la plaque de répartition 48 vienne en appui contre l'épaulement 49, déterminant ainsi une valeur précise de serrage du plot élastomère 46.

Ainsi assemblée, la platine 34 est donc liée de façon souple au support 16, ce qui permet notamment à l'élément de plaque 32 du support 16 de bouger par rapport à la vis 22 sans entraîner avec lui l'écrou 24 lorsque le support 16 se déforme. L'effort exercé par l'écrou 24 sur la vis 22 est donc limité à la valeur de l'effort de compression des plots 46.

Le mouvement de la platine 34 par rapport à l'élément de plaque 32 est pour l'essentiel un mouvement de coulissement transversal, mais, étant donnée la faible longueur de guidage des vis 42 dans les orifices 40, la platine 34 peut aussi pivoter légèrement par rapport au support 16 autour de deux axes perpendiculaires à l'axe A1 et perpendiculaires entre eux.

De préférence, il est prévu des moyens spécifiques qui permettent d'éviter toute rotation de la platine 34 autour de l'axe A1. En effet, il n'est pas souhaitable que cette fonction soit remplie par les vis 42, sous peine d'induire des frottements qui pourraient gêner le coulissement relatif de la platine 34 et du support 16. Aussi, la platine 34 est munie à sa périphérie d'une rainure 52 ouverte radialement vers l'extérieur par rapport à l'axe A1. Une clavette 50, solidaire de l'embase du support 16, est reçue dans la rainure 52 pour assurer une indexation angulaire précise de la platine 34 autour de l'axe A1, sans induire d'effort de cisaillement sur les vis 42.

Bien entendu, l'invention n'est pas limitée au seul mode de réalisation décrit en détail ci-dessus. En effet, on peut envisager de mettre en oeuvre l'invention dans le cas où le mécanisme de déplacement des supports est d'un autre type, par exemple un mécanisme à came. De même, l'invention est applicable dans le cas où les supports sont animés d'un mouvement relatif autre qu'une translation, à savoir par exemple un mouvement de rotation comme dans le cas d'un moule de type « portefeuille ». De la même manière, l'homme du métier pourra aisément déterminer des formes de réalisation équivalentes pour former les moyens déformables élastiquement qui sont interposés entre le mécanisme et le support.

## Revendications

1. Unité de moulage pour une machine d'extrusion-soufflage d'articles en matériau thermoplastique, du type dans lequel l'unité de moulage (10) comporte un moule en deux parties (12, 14), chaque demi-moule (12, 14) étant porté par un support mobile (16, 18), du type dans lequel les deux supports mobiles (16, 18) sont déplacés transversalement, selon des sens opposés par rapport à un châssis qui les porte, entre une position ouverte dans laquelle les deux demi-moules (1-2, 14) sont dégagés transversalement l'un de l'autre pour permettre l'introduction d'une ébauche de l'article dans une cavité délimitée entre les deux demi-moules, et une position fermée dans laquelle les deux demi-moules sont en appui l'un contre l'autre et dans laquelle les supports (16, 18) sont liés l'un à l'autre par des moyens de verrouillage, du type dans lequel l'unité de moulage (10) comporte un mécanisme (22, 24, 26) de déplacement simultané des deux supports de moules (16, 18), et du type dans lequel l'unité de moulage (10) comporte, entre au moins l'un des demi-moules (12) et le support associé (16), des moyens de compensation (30) qui poussent transversalement le demi-moule (12) en direction de l'autre demi-moule (14),
**caractérisée en ce que** le mécanisme (24) de déplacements des supports est lié au moins au dit support associé (16) par l'intermédiaire de moyens déformables élastiquement (46) aptes à compenser la déformation du support (16) créée par les efforts exercés par les moyens de compensation (30).

2. Unité de moulage selon la revendication 1, **caractérisée en ce que** le mécanisme de déplacement agit sur une platine (34) qui est montée à coulissement transversal sur le support (32, 16), et **en ce que** des moyens formant ressort (46) sont interposés transversalement entre la platine (34) et le support (32, 16).

3. Unité de moulage selon l'une des revendications 1 ou 2, **caractérisée en ce que** la platine (34) peut pivoter par rapport au support (16).

4. Unité de moulage selon l'une des revendications 2 ou 3, **caractérisée en ce que** les moyens formant ressort comportent des blocs en matériau élastomère (46).

5. Unité de moulage selon l'une quelconque des revendications précédentes, **caractérisée en ce que** le mécanisme de déplacement des deux supports (16, 18) comporte une vis d'entraînement (22) qui est munie de deux tronçons filetés (22a, 22b), les sens d'enroulement des filetages des deux tronçons étant opposés et chaque tronçon fileté coopérant chacun avec un écrou (24, 26) lié à l'un des supports, et **en ce que** les moyens déformables élastiquement (46) sont interposés entre l'écrou (24) et le support (16) auquel il est lié.

6. Unité de moulage selon la revendication 5, **caractérisée en ce que** les écrous (24, 26) sont des écrous à billes.

7. Unité de moulage selon l'une quelconque des revendications précédentes, **caractérisée en ce qu'**elle comporte des moyens de compensation (30) uniquement entre l'un (12) des demi-moules et le support associé (16), et **en ce que** les moyens déformables élastiquement (46) sont interposés uniquement entre ledit support associé et le mécanisme de déplacement des supports (16, 18).

8. Machine d'extrusion-soufflage, **caractérisée en ce qu'**elle comporte au moins une unité de moulage conforme à l'une quelconque des revendications précédentes.

## Patentansprüche

1. Formeinheit für eine Maschine zum Extrusionsblasformen von Artikeln aus thermoplastischem Material, jener Art, bei der die Formeinheit (10) eine zweiteilige Blasform (12, 14) umfasst, wobei jede Formhälfte (12, 14) durch einen beweglichen Träger (16, 18) gestützt wird, jener Art, bei der die beiden beweglichen Träger (16, 18) in Querrichtung in entgegengesetzten Richtungen bezüglich eines sie tragenden Rahmens zwischen einer geöffneten Stellung, in der die beiden Formhälften (12, 14) in Querrichtung voneinander ausgerückt sind, um die Einführung eines Blasformrohlings des Artikels in eine zwischen den beiden Formhälften begrenzte Höhlung zu gestatten, und einer geschlossenen Stellung, in der die beiden Formhälften aneinander anliegen und in der die Träger (16, 18) durch Verriegelungsmittel miteinander verbunden sind, bewegt werden, jener Art, bei der die Formeinheit (10) einen Mechanismus (22, 24, 26) zur gleichzeitigen Verschiebung der beiden Blasformträger (16, 18) enthält, und jener Art, bei der die Formeinheit (10) zwischen mindestens einer der Formhälften (12) und dem zugehörigen Träger (16) Ausgleichsmittel (30) enthält, die die Formhälfte (12) in Querrichtung in Richtung der anderen Formhälfte (14) schieben,
**dadurch gekennzeichnet, dass** der Mechanismus (24) zur Verschiebung der Träger durch elastisch verformbare Mittel (46), die die durch die durch die Ausgleichsmittel (30) ausgeübten Kräfte erzeugte Verformung des Trägers (16) ausgleichen können, zumindest mit dem zugeordneten Träger (16) verbunden ist.

2. Formeinheit nach Anspruch 1, **dadurch gekennzeichnet, dass** der Verschiebungsmechanismus auf eine Halteplatte (34) einwirkt, die zur Querverschiebung auf dem Träger (32, 16) angebracht ist, und dass die Federmittel (46) quer zwischen der Halteplatte (34) und dem Träger (32, 16) angeordnet sind.

3. Formeinheit nach Anspruch 1 oder 2, **dadurch gekennzeichnet, dass** die Halteplatte (34) bezüglich des Trägers (16) schwenken kann.

4. Formeinheit nach Anspruch 2 oder 3, **dadurch gekennzeichnet, dass** die Federmittel Blöcke (46) aus elastomerem Material umfassen.

5. Formeinheit nach einem der vorhergehenden Ansprüche, **dadurch gekennzeichnet, dass** der Mechanismus zur Verschiebung der beiden Träger (16, 18) eine Antriebsspindel (22) enthält, die mit zwei Gewindeabschnitten (22a, 22b) mit gegenläufigen Gewinden versehen ist, wobei jeder Gewindeabschnitt mit einer Mutter (24, 26) zusammenwirkt, die mit einem der Träger verbunden ist, und dass die elastisch verformbaren Mittel (46) zwischen der Mutter (24) und dem Träger (16), mit dem sie verbunden ist, angeordnet sind.

6. Formeinheit nach Anspruch 5, **dadurch gekennzeichnet, dass** die Muttern (24, 26) Kugelmuttern sind.

7. Formeinheit nach einem der vorhergehenden Ansprüche, **dadurch gekennzeichnet, dass** sie nur zwischen einer (12) der Formhälften und dem zugeordneten Träger (16) Ausgleichsmittel (30) umfasst und dass die elastisch verformbaren Mittel (46) nur zwischen dem zugeordneten Träger und dem Mechanismus zur Verschiebung der Träger (16, 18) angeordnet sind.

8. Extrusions-Blasformmaschine, **dadurch gekennzeichnet, dass** sie mindestens eine Formeinheit nach einem der vorhergehenden Ansprüche enthält.

## Claims

1. Moulding unit for a machine for the extrusion/blow moulding of items made of thermoplastic, of the type in which the moulding unit (10) comprises a mould in two parts (12, 14), each half-mould (12, 14) being carried by a moving support (16, 18), of the type in which the two moving supports (16, 18) are moved transversely, in opposite directions with respect to a chassis which carries them, between an open position in which the two half-moulds (12, 14) are transversely clear of one another to allow a preform of the item to be introduced into a cavity delimited between the two half-moulds, and a closed position in which the two half-moulds are pressed together and in which the supports (16, 18) are connected together by locking means, of the type in which the moulding unit (10) comprises a mechanism (22, 24, 26) for simultaneously moving the two mould supports (16, 18), and of the type in which the moulding unit (10) comprises, between at least one of the half-moulds (12) and the associated support (16), compensating means (30) which push the half-mould (12) transversely towards the other half-mould (14),
**characterized in that** the mechanism (24) for moving the supports is connected at least to the said associated support (16) via elastically deformable means (46) able to compensate for the deformation of the support (16) which deformation is created by the efforts exerted by the compensating means (30).

2. Moulding unit according to Claim 1, **characterized in that** the movement mechanism acts on a mounting plate (34) which is mounted to slide transversely on the support (32, 16), and **in that** spring-forming means (46) are inserted transversely between the mounting plate (34) and the support (32, 16).

3. Moulding unit according to either of Claims 1 and 2, **characterized in that** the mounting plate (34) can pivot with respect to the support (16).

4. Moulding unit according to either of Claims 2 and 3, **characterized in that** the spring-forming means comprise blocks of elastomeric material (46).

5. Moulding unit according to any one of the preceding claims, **characterized in that** the mechanism for moving the two supports (16, 18) includes a drive screw (22) which is equipped with two threaded portions (22a, 22b), the two portions being of opposite hand and each threaded portion collaborating with a nut (24, 26) connected to one of the supports, and **in that** the elastically deformable means (46) are inserted between the nut (24) and the support (16) to which it is connected.

6. Moulding unit according to Claim 5, **characterized in that** the nuts (24, 26) are ball nuts.

7. Moulding unit according to any one of the preceding claims, **characterized in that** it comprises compensating means (30) only between one (12) of the half-moulds and the associated support (16), and **in that** the elastically deformable means (46) are inserted only between the said associated support and the mechanism for moving the supports (16, 18).

8. Extrusion/blow moulding machine, **characterized in that** it comprises at least one moulding unit according to any one of the preceding claims.
